# EUROPEAN PATENT APPLICATION

(11) **EP 4 572 465 A1**
(43) Date of publication of application: **18.06.2025**
(21) Application number: 23852871.5
(22) Date of filing: 02.08.2023
(51) Int. Cl.: H04W 72/04, H04W 72/23, H04W 72/53, H04W 76/28, H04L 5/00, H04W 72/51

(54) **METHOD AND DEVICE FOR TRANSMITTING/RECEIVING SIGNAL IN WIRELESS COMMUNICATION SYSTEM**

(30) Priority: 10.08.2022 KR 20220100235; 29.09.2022 KR 20220124783
(71) Applicant: LG Electronics Inc., Yeongdeungpo-gu Seoul 07336 (KR)
(72) Inventor: CHOI, Seunghwan, Seoul 06772 (KR); MYUNG, Sechang, Seoul 06772 (KR); YANG, Suckchel, Seoul 06772 (KR); KIM, Seonwook, Seoul 06772 (KR)
(74) Representative: Plasseraud IP
(86) International application number: PCT/KR2023/011338
(87) International publication number: WO 2024/034991

(57) **Abstract**

A method and a device, disclosed in the present specification, for transmitting/receiving a signal in a wireless communication system comprise an operation of switching an active bandwidth part (BWP) on the basis of a switching pattern in an NES mode.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a signal transmission and reception method for efficiently transmitting and receiving signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

In an aspect of the present disclosure, provided herein is a method of configuring radio resources by a user equipment (UE) in a wireless communication system. The method includes: receiving a configuration for a switching pattern between a first bandwidth part (BWP) and a second BWP for a network energy saving (NES) mode; switching an active BWP from the first BWP to the second BWP according to the switching pattern based on data to be transmitted or received; and transmitting or receiving the data in the second BWP.

In another aspect of the present disclosure, an apparatus, a processor, and a storage medium for performing the signal receiving method are provided. In addition, in another aspect of the present disclosure, an apparatus, a processor and a storage medium for performing the signal transmitting method are provided.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to one embodiment of the present disclosure, when signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 is diagrams illustrating methods for transmitting and receiving a signal according to the embodiments of the present disclosure.
FIGS. 5 to 8 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

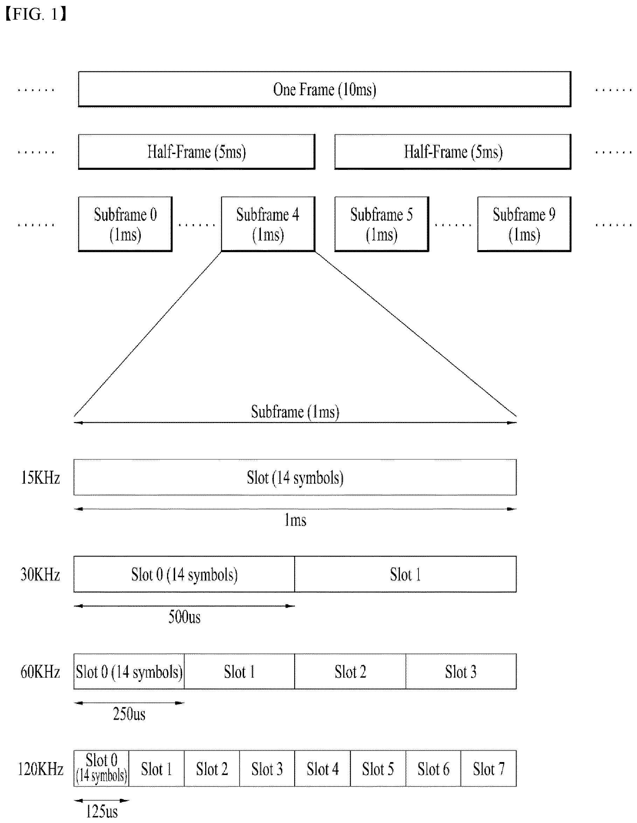

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

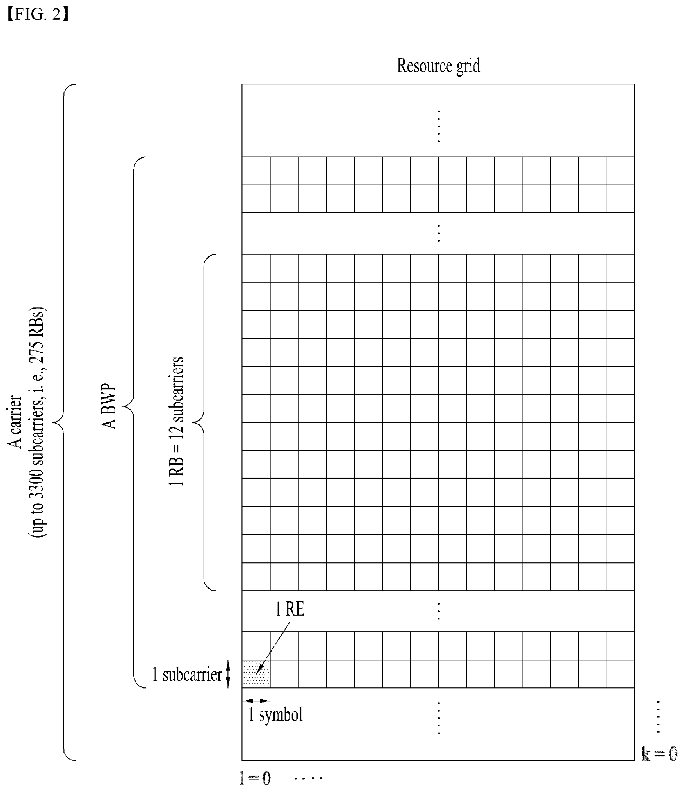

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

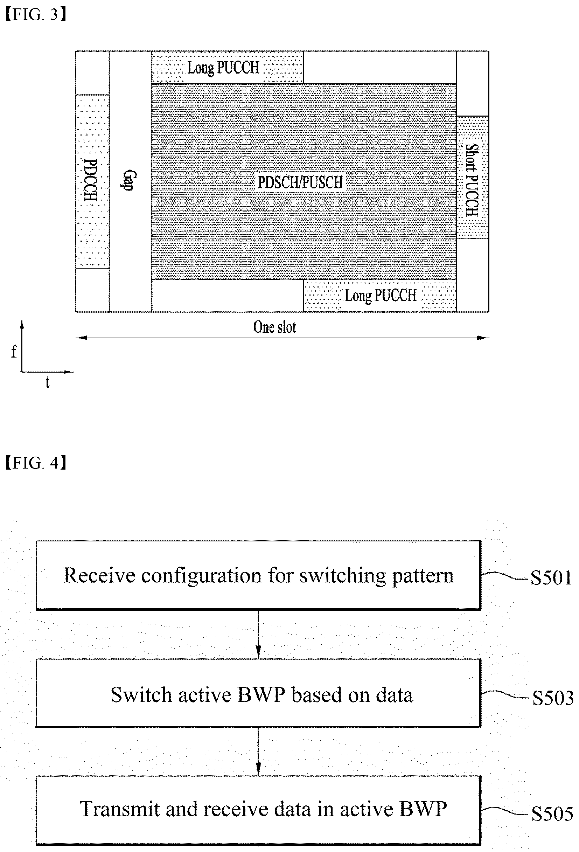

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### BWP Switching in Network Energy Saving (NES) Mode

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

New technologies and operational methods may be discussed in the future to improve energy saving capabilities from the perspective of transmission and reception at the BS. The following is the justification for the study item approved in Rel-18 for this purpose.

**[Table 4]**

| Excerpt from RP-213554 |
|---|
| Network energy saving is of great importance for environmental sustainability, to reduce environmental impact (greenhouse gas emissions), and for operational cost savings. As 5G is becoming pervasive across industries and geographical areas, handling more advanced services and applications requiring very high data rates (e.g. XR), networks are being denser, use more antennas, larger bandwidths and more frequency bands. The environmental impact of 5G needs to stay under control, and novel solutions to improve network energy savings need to be developed. |
| Energy consumption has become a key part of the operators' OPEX. According to the report from GSMA [1], the energy cost on mobile networks accounts for ~23% of the total operator cost. Most of the energy consumption comes from the radio access network and in particular from the Active Antenna Unit (AAU), with data centres and fibre transport accounting for a smaller share. The power consumption of a radio access can be split into two parts: the dynamic part which is only consumed when data transmission/reception is ongoing, and the static part which is consumed all the time to maintain the necessary operation of the radio access devices, even when the data transmission/reception is not on-going. |
| Therefore, there is a need to study and develop a network energy consumption model especially for the base station (a UE power consumption model was already defined in TR38.840), KPIs, an evaluation methodology and to identify and study network energy savings techniques in targeted deployment scenarios. The study should investigate how to achieve more efficient operation dynamically and/or semi-statically and finer granularity adaptation of transmissions and/or receptions in one or more of network energy saving techniques in time, frequency, spatial, and power domains, with potential support/feedback from UE, potential UE assistance information, and information exchange/coordination over network interfaces. |
| The study should not only evaluate the potential network energy consumption gains, but also assess and balance the impact on network and user performance, e.g. by looking at KPIs such as spectral efficiency, capacity, user perceived throughput (UPT), latency, UE power consumption, complexity, handover performance, call drop rate, initial access performance, SLA assurance related KPIs, etc. The techniques to be studied should avoid having a large impact to such KPIs |

The present disclosure proposes technologies and configuration/operational methods capable of being introduced for the purpose of energy saving at the BS.

For energy saving at the BS, a network energy saving (NES) mode (i.e., a mode for energy saving at the BS) may be defined. A BS operating in the NES mode may reduce the power consumption thereof by suspending (holding) DL or UL transmission for a specific period or limiting transmission and reception operations in specific frequency bands. In the present disclosure, the NES mode may refer to the operational mode of the BS and/or UE that is defined/configured/indicated for such a purpose. Additionally, in the present disclosure, the operational mode of the UE (or cell) where the NES mode (or NES-based configuration) is not configured is referred to as non-NES mode to distinguish the operational mode from the NES mode.

The NES mode may be maintained only for a specific time period. In the proposals described later, a time period during which the BS operates in the NES mode is referred to as a NES duration. The NES mode may be valid only for specific frequency resources. In the proposals described later, frequency resources corresponding to the NES mode are referred to as an NES band.

The NES mode may be configured by the BS through separate higher layer signaling or higher layer configurations. Alternatively, the NES mode may be dynamically configured to the BS/UE through other control channels (e.g., DCI-based indication) or data channels (e.g., PDSCH, PUSCH). During the NES mode, the BS may turn on/off specific time, frequency, antenna resources, etc., and may not transmit/receive related data channels, control channels, or control signals. During the NES mode, the UE may operate by expecting that specific time/frequency/antenna resources will be turned on/off and that related channels/signals will not be transmitted.

A BWP for the NES mode (NES-BWP) may be defined/configured for UE having defined/configured the NES mode. The NES-BWP may be set as a separate BWP that operates only in the NES mode. In this case, a BWP for the non NES mode may not be defined or deactivated. Alternatively, a specific (single) BWP may be configured differently for the NES mode and non-NES mode. For example, a specific BWP may be set as the NES-BWP during the NES duration and set as a different BWP during other durations. The configuration methods and constraints of the NES-BWP may be defined/configured separately from the conventional BWP. For example, in the NES-BWP, PDCCH monitoring may not be performed, but aperiodic CSI-RS signals and reports may be configured. As another example, the periodicity of a periodic CSI-RS may be reinterpreted in the NES-BWP.

A unique BWP switching operation in the NES mode may be defined. For example, in the conventional BWP switching configuration/operation, when a BWP other than the default BWP is the active BWP, a timer is set. If the timer expires, the current active BWP is switched to inactive, and the default BWP reverts to the new active BWP. On the other hand, in the NES mode, if the timer expires, the current active BWP may be switched to inactive, and the dormant BWP or NES-BWP may switch to the new active BWP. Alternatively, if the timer expires, the current active BWP may switch to inactive, and the default BWP may switch to the new active BWP (as in the conventional operation). If no DL/UL transmission is scheduled/configured in the default BWP for a certain period, the default BWP may switch to inactive, and the dormant BWP or NES-BWP may switch to the new active BWP.

The proposed methods described later may be applied independently under the conditions described for each method or configured only during the NES duration. Alternatively, the methods may be applied only in the NES band.

In the proposed methods described later, operating in the non-NES mode means arbitrary NR configurations/operations that are not configured for NES (e.g., configurations/operations specified in Rel-15, Rel-16, or Rel-17 NR specifications). In the proposed methods described later, an operation of switching to the NES mode may only be applied to UEs/cells configured for NES. Additionally, the NES mode is not limited to specific configurations or operational methods. That is, the NES mode may be any configuration or operational method defined/configured for NES. In the proposed methods described later, switching to the NES mode may also be understood as switching to the NES-BWP.

In the proposed methods described below, the expression that a particular parameter (or behavior) is " configured" can be understood to mean that the parameter (or behavior) is configured for any cell, or for any particular terminal, or for a configured cell of a particular terminal, or for a configured DL (or UL) BWP of a particular cell, or for an active DL (or UL) BWP of a particular cell.

For convenience of explanation, in the present disclosure, a DL BWP and/or UL BWP may be simply referred to as a BWP. Unless otherwise specified, the DL BWP and/or UL BWP may refer to a BWP (configured for the UE) or an active BWP (among configured BWPs).

In the proposed method described later, a MAC control element (CE) or DCI (e.g., a MAC CE or DCI triggering BWP switching or configuring/activating/deactivating specific operations) may be transmitted in a UE-specific, UE group-common, or cell-specific manner. The DCI may be scrambled with an RNTI configured in a UE-specific, UE group-common, or cell-specific manner and then transmitted. The MAC CE may be transmitted over a PDSCH scheduled by DCI scrambled with an RNTI configured in a UE-specific, UE group-common, or cell-specific manner.

### [1] BWP switching for NES mode.

[1-1] In the NR system, each UE may be configured with a maximum of 4 DL (or UL) BWPs. The configuration values such as the bandwidth, the number of RBs, the SCS, etc. may vary for each BWP. Even if multiple BWPs are configured for the UE, data and control channels/signals may be transmitted and/or received in a single active DL (or UL) BWP. Depending on data traffic that the UE is transmitting or receiving, the required (or suitable) BWP may vary. Depending on the type, nature, and/or pattern of the data traffic, the current active BWP configured for the UE may need to be switched to another BWP. BWP switching may be triggered through signaling such as RRC, MAC CE, DCI, etc.

[1-2] For each UE, it may be necessary to switch to a specific BWP at a specific time depending on the type (or traffic pattern) of traffic. For example, the amount of DL traffic may be below a threshold for most of the time, but DL traffic exceeding the threshold may be received during a specific period of time at a certain periodicity. On the other hand, a period with no DL traffic may occur at a certain periodicity. For semi-persistent traffic such as Voice over Internet Protocol (VoIP), the required frequency bandwidth may vary depending on the time period. For such types of traffic, a BWP switching (time) pattern may be preconfigured. Subsequently, the BWP switching may be performed according to a predetermined pattern without separate signaling indicating the BWP switching (e.g., via DCI). In this case, the BWP switching pattern may be predefined (based on frequency bands, traffic types, and traffic patterns). Alternatively, the BWP switching pattern may be configured through RRC, MAC-CE, or DCI. More specifically, the predefined or configured BWP switching pattern may include: (1) the type of traffic to which the pattern is applied; (2) the number of periods in the pattern and the length of each period; and (3) the BWP to be used in each period. However, the present disclosure is not limited thereto. As an example, if the type of traffic configured for the UE is a specific service (e.g., VoIP), BWP #1 may be used as the active DL (or UL) BWP for a certain period (e.g., during frames where the SFN is an even number), and for another period (e.g., during frames where the SFN is an odd number), the active DL (or UL) BWP may be switched to BWP #2 (without separate signaling).

Additionally, the BWP switching based on the aforementioned pattern (or condition) may be configured through higher layer signaling such as RRC and then activated or deactivated through a MAC-CE (or DCI). Alternatively, multiple BWP switching patterns (or conditions) may be configured through higher layer signaling such as RRC, and then one of the multiple BWP switching patterns (or conditions) may be configured and/or indicated through a MAC-CE (or DCI).

[1-3] The optimal BWP may vary depending on the data buffer (or HARQ buffer) status of the UE. For example, even if the BS has data to transmit, the suitable BWP may differ depending on whether the DL reception buffer (or UL transmission data buffer) of the UE is full or empty. If the UL data transmission buffer of the UE is full, a UL BWP exceeding a predetermined size may be used to transmit UL data that exceeds a threshold. On the other hand, if the transmission buffer is empty, a BWP of a size smaller than the predetermined size may be sufficient. Therefore, a method of adaptively changing the active BWP based on the data buffer status of the UE may be configured. When BWP switching conditions based on the buffer status are predefined, the BWP switching may be performed as the predetermined conditions are met, without separate signaling (e.g., via DCI) indicating the BWP switching. In this case, the BWP switching conditions (frequency bands, buffer types, etc.) may be predefined or configured through RRC, MAC-CE, or DCI. More specifically, the BWP switching conditions that are predefined or configured may include: (1) the type of buffer to which the BWP switching is applied; (2) a threshold for the BWP switching; (3) a BWP to be switched to when the amount of the buffer exceeds a threshold, and a BWP to be switched to when the buffer amount is below the threshold. However, the present disclosure is not limited thereto. As an example, if the amount of the UL data buffer of the UE exceeds a threshold (or exceeds a predetermined percentage of the full buffer), the active BWP may switch to BWP #1. On the other hand, if the amount of the UL data buffer is below the threshold (or below the predetermined percentage of the full buffer), the active BWP may switch to BWP #2. In the present disclosure, the relationships described as exceeding/below may also be interpreted as above/less than. Additionally, the buffer status that serves as the reference in the method may be the state at a (periodic) specific moment or the average value over a specific period. The buffer status may refer to values from the periodic or aperiodic buffer status report of the UE.

Alternatively, the BS may predict data to be exchanged with the UE, configure a specific BWP switching pattern, and indicate the BWP switching pattern to the UE.

Additionally, the BWP switching based on the aforementioned pattern (or condition) may be configured through higher layer signaling such as RRC and then activated or deactivated through a MAC-CE (or DCI). Alternatively, multiple BWP switching patterns (or conditions) may be configured through higher layer signaling such as RRC, and one of the BWP switching patterns (or conditions) may be configured and/or indicated through a MAC-CE (or DCI).

[1-4] In the BWP switching operation configured according to Methods [1-2] and [1-3] described above, BWPs before and after the switching may be limited to include only overlapping BWPs. For example, two BWPs used for switching: BWP #1 and BWP #2 may fully overlap. Specifically, BWP #1 may include all the RBs of BWP #2. Alternatively, BWP #1 and BWP #2 may partially overlap. Specifically, some of the RBs of BWP #1 may be the same as those of BWP #2. The pattern-based (or condition-based) BWP switching operation described in [1-2] and [1-3] may be configured and/or applied only when two BWPs are in an overlapping relationship. For switching between overlapping BWPs, a relatively short BWP switching delay may be expected.

[1-5] The methods described in [1-2] and [1-3] may be configured together (i.e., the BWP switching pattern or the BWP switching conditions may be determined or configured by considering both the traffic pattern and the buffer status).

[1-6] A method of configuring the BWP switching pattern (or BWP switching conditions) described in [1-2], [1-3], and [1-4] is not necessarily limited to be configured and/or applied using the type and/or pattern of traffic or the buffer status. In other words, based on metrics other than the traffic pattern and/or buffer status, the BWP switching pattern or conditions may be configured in such a way that the BWP switching is performed automatically (without a BWP switching command) as described in [1-2] and/or [1-3].

When one of the methods described in [1-2] to [1-6] is configured, the UE may perform BWP switching according to the determined/configured switching pattern (or conditions). However, as an exception, it may be configured and/or indicated through separate DCI that the switching according to the determined pattern (or conditions) is not performed for a specific period. For example, when BWP #1 has a smaller bandwidth than BWP #2 and a pattern for repeatedly switching between BWP #1 and BWP #2 is configured, if BWP #2 is required temporarily while BWP #1 is the active BWP, BWP switching according to the pattern (or conditions) may need to be disabled for a specific period. To this end, separate DCI may be used to configure and/or indicate that the pattern-based (or condition-based) BWP switching operation is disabled for a specific period. For the configuration and/or indication via the DCI, DCI for scheduling a PDSCH (or PUSCH) or separate dedicated DCI (i.e., non-scheduling DCI) may be used. As another method, the pattern-based (or condition-based) BWP switching may be configured through higher layer signaling, such as RRC, and then activated or deactivated via a MAC-CE (or DCI). Additionally, as described above, an operation of temporarily disabling the BWP switching pattern may be performed.

Alternatively, if data to be transmitted (or received) or hybrid automatic repeat and request acknowledgement (HARQ-ACK) transmission occurs in the currently configured active BWP, the UE may maintain the current BWP until the data transmission/reception and/or HARQ transmission is completed and ignore the BWP change according to the preconfigured BWP switching pattern. In this case, the UE may switch from the active BWP to the scheduled BWP immediately after the data transmission/reception and/or HARQ transmission is completed. Alternatively, the UE may skip the BWP switching overlapping with a time period from the occurrence to the completion of the data transmission/reception and/or HARQ transmission.

[1-8] The methods described in [1-2] to [1-7] may be applied in the unit of an RB set (or RB set group). In this case, the RB set may refer to a contiguous RBs that belong to a single BWP. The RB set group may refer to a plurality of contiguous RB sets. In the RB set (or RB set group), the number and positions of RBs may be configured for each SCS through RRC signaling. When the number and positions of RBs are configured, the UE may transmit and/or receive control channels such as a PDCCH and data channels such as a PDSCH and/or PUSCH only within the RB set (or RB set group) in the active BWP. More specifically, as proposed in [1-2], [1-3], and [1-4], a pattern for switching from a specific RB set (or RB set group) to another specific RB set (or RB set group) (among RBs included in a single BWP) may be defined and/or configured based on the type/pattern of traffic. Alternatively, the conditions for switching may be defined and/or configured.

### [2] A method of transitioning between a normal BWP switching operation and a specific BWP switching pattern

For convenience of explanation, the BWP switching operation supported in conventional NR Rel-15/16/17 (triggered by RRC/MAC-CE/DCI, etc.) is referred to as BWP switching type 1, and the pattern-based (or condition-based) BWP switching method proposed in [1] is referred to as BWP switching type 2.

[2-2] BWP switching type 2 may be configured and/or applied using a normal BWP (configured for the non-NES mode) and a NES-BWP when the NES operation mode is configured for the UE (or when the NES-BWP is configured). For example, based on a specific pattern (or condition), the active BWP may switch to either the normal BWP or NES-BWP periodically (or if conditions are met) (with no separate BWP switching indication). Meanwhile, in the case of BWP switching type 1, the active BWP may also be configured and/or indicated to switch from the normal BWP to the NES-BWP or from the NES-BWP to the normal BWP.

[2-3] A method of transitioning between BWP switching type 1 and BWP switching type 2 may be defined and/or configured. For a transition command, a specific field in DCI for scheduling a PDSCH (or PUSCH) may be used. Alternatively, a separate MAC-CE or DCI may be used for the transition command. For example, when the UE is operating with BWP switching type 1 (or type 2), if a transition to type 2 (or type 1) is configured and/or instructed through DCI, the UE may transition to BWP switching type 2 (or type 1) after a predetermined delay (= T_a) and operate accordingly. Alternatively, when BWP switching type 1 (or type 2) is configured as the default switching type for the UE, if a BWP switching type change command is received, the UE may transition to BWP switching type 2 (or type 1). Subsequently, for a "specific time" (= T_b), the UE may operate with BWP switching type 2 (or type 1). After T _b passes, the UE may fall back to the default switching type, which is BWP switching type 1 (or type 2). When the UE transitions from the default BWP switching type to another BWP switching type or vice versa, the UE may apply the changed BWP switching type after the delay of T_a after receiving the transition command. The values of T_a and T _b may be predefined or preconfigured.

[2-4] When BWP switching type 2 is configured/applied to the UE (or cell), the BWP may be changed according to a predefined pattern (or when specific conditions are met) even if no BWP switching command is received. As a result, in the case of DCI scheduling PDSCH reception (or PUSCH transmission), a DCI reception time and/or a k0 (or k2) configuration value may be restricted to ensure that the PDSCH (or PUSCH) is received (or transmitted) within a period where the corresponding BWP is configured. For example, it is assumed that BWP #1, a normal BWP, includes more RBs than BWP #2, an NES-BWP, and BWP switching type 2 is configured. When the active BWP is configured to switch to BWP #1 in a period of [t0, t1], switch to BWP #2 in a period of [t1, t2], and switch to BWP #1 in a period of [t2, t3], the PDSCH reception may be possible in the period [t0, t1] or [t2, t3] where BWP #1 is configured, while the PDSCH reception may not be performed in the period [t1, t2] where BWP #2 is configured. The reception time of the DCI scheduling the PDSCH reception and/or the k0 value configured/indicated through the DCI (which refers to a parameter indicating a slot offset between the PDCCH reception and the PDSCH reception) may be configured such that the PDSCH is received in the [t0, t1] or [t2, t3] periods. If the k0 value is configured such that the PDSCH is received in the [t1, t2] period, the UE may drop the corresponding PDSCH.

[2-5] When the UE is operating with a configured BWP switching pattern (i.e., BWP switching type 2) if an existing DCI-based BWP switching indication (i.e., BWP switching type 1) is received, the UE may override the configured BWP switching pattern (i.e., BWP switching type 2) and fall back to the previous operation (i.e., BWP switching type 1). In this case, the UE may not return to BWP switching type 2 and may maintain BWP switching type 1 until a separate configuration and/or indication is received. Alternatively, the UE may maintain the fallback to BWP switching type 1 for a certain period (or a certain number of slots/symbols) and then return to BWP switching type 2.

### [4] A method of applying different configurations for the proposed methods based on a discontinuous reception (DRX) configuration

The NR (e.g., Rel-17) standard specifies DRX configurations/operations. The features of DRX, which are used to reduce unnecessary power consumption for the UE, are as follows.

DRX defines two structures: one structure for UEs in the RRC_IDLE state (referred to as I-DRX) and one structure for UEs in the RRC_CONNECTED state (referred to as C-DRX). The two DRX structures are defined such that a period during which the UE may expect to receive DL signals (e.g., active time period or on duration period) occurs periodically to reducing unnecessary power consumption during other periods. For reference, in the case of C-DRX, the start of the on-duration period occurs periodically. The size of a configurable cycle (i.e., DRX cycle) may be determined/configured through higher layer signaling, such as RRC signaling, provided by the BS to the UE.

In the present disclosure, DRX may refer to C-DRX and/or I-DRX.

In the present disclosure, a period during which the UE (configured with DRX) may expect to receive DL signals within the DRX cycle may be expressed as the DRX active time (or on-duration).

In the proposed methods described above (i.e., methods described in [1] to [2]), when the UE is configured with DRX, the application or configurations may vary between the DRX active time and other time periods. For example, the proposed methods may be applied/configured during the DRX active time, and may not be applied/configured during the other periods. Alternatively, the proposed methods may not be applied/configured during the DRX active time (i.e., operating in the non-NES mode), and may be applied/configured for the NES mode operation during the other periods.

In the proposed methods described above, when the UE is configured with DRX, different configuration may be applied during the DRX active time and other periods within the DRX cycle. For example, the BWP switching-related operations (described in [1]) may be configured separately for the DRX active time and the other time periods. Alternatively, the operations related to the BWP switching pattern (described in [2]) may be configured differently for the DRX active time and the other time periods. Alternatively, the UE may operate in the NES mode during the DRX active time and in the non-NES mode during the other periods. On the other hand, the UE may operate in the non-NES mode during the DRX active time and in the NES mode during the other periods.

For multiple DRX configurations, the proposed methods above may be applied differently for each DRX configuration. That is, the UE may operate in the NES mode for some DRX configurations (or when the UE receives the DRX configurations), and the UE may operate in the non-NES mode for other DRX configurations (or when the UE receives the other DRX configurations). In this case, one of the multiple DRX configurations (i.e., DRX configuration switching) may be one DRX configuration configured/indicated through RRC signaling (GC-DCI or MAC-CE) among N DRX configurations provided to the UE via (UE-dedicated) RRC signaling.

For example, when the UE operates in an NES BWP (or non-NES BWP) according to DRX configuration #1, if the DRX configuration switches to DRX configuration #2 (due to the indication of DRX configuration switching), the UE may switch to a non-NES BWP (or NES BWP).

For multiple DRX configurations, the proposed methods above may be applied differently for each DRX configuration. That is, for some DRX configurations (or when the DRX configurations are provided), a specific one of the proposed methods may be applied/configured, and for other DRX configurations (or when the other DRX configurations are provided), a different specific one of the proposed methods may be applied/configured.

The proposed methods above may be configured/applied differently for each BWP. That is, for some BWPs (or when the BWPs are an active BWP), the UE may operate in the NES mode, and for other BWPs (or when the other BWPs are an active BWP or when a BWP operating in the NES mode is changed to an inactive BWP), the UE may operate in the non-NES mode.

In the proposed methods above, the above-described timers related to the NES mode (or non-NES mode) may be paused (held) or (re)started during the NES mode (or non-NES mode). Alternatively, the timer may be paused during the DRX active time (or other time periods).

Additionally, for example, during the NES mode (e.g., NES duration), the timer may remain paused without decreasing or increasing, and once the NES mode (e.g., NES duration) ends, the counting operation may resume.

Additionally, an SCS for determining slots where the timer decreases (for instructing NES mode switching) may be configured based on a smaller value between the SCS of a PDCCH and the SCS of the timer domain (e.g., PDSCH). Alternatively, the SCS for determining slots where the timer decreases may be configured based on the smallest SCS between the SCS of a PDCCH and the SCS of a PDSCH (SCS in the active or inactive state).

Additionally, when multiple cells are linked to the timer (and related configurations/operations), (which may be preconfigured via RRC signaling), the timer may be configured or operated for each cell group.

In the proposed methods above, when multiple cells are configured for the UE configured with DRX, to operate only some specific cells in the NES mode (or non-NES mode), the UE may group cells that belong to the same DRX configuration (or DRX group) in advance and configure the timer to operate on a cell group basis. The operation of the timer includes incrementing, decrementing, pausing, and (re)starting the timer.

The contents of the present disclosure are not limitedly applied only to UL and/or DL signal transmission and reception. For example, the contents of the present disclosure may also be used for direct communication between UEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

### Implementation examples

FIG. 4 is a flowchart of a resource configuration method according to embodiments of the present disclosure.

Referring to FIG. 4, a signal transmission and reception method according to an embodiment of the present disclosure may be performed by the UE. The method may include: receiving a configuration of a switching pattern (S501); performing BWP switching based on data (S503); and transmitting or receiving data on an active BWP as a result of the BWP switching (S505). In addition to the operations in FIG 4, at least one of the operations described in Sections [1] to [3] may be performed.

For example, referring to Section [1], the configuration of the switching pattern is a configuration for an NES mode, which switches an active BWP from a first BWP to a second BWP when specific conditions are met. Conventional BWP switching occurs due to RRC signaling, DCI, inactivity timers, or initialization of random access. When the UE is configured with the NES mode, and when the UE receives the configuration for the switching pattern, BWP switching may be performed even without explicit signaling if the specific conditions are met.

In particular, referring to Sections [1-2] and [1-3], based on the data to be transmitted or received, the active BWP switches from the first BWP to the second BWP according to the received and configured switching pattern.

Specifically, in the embodiment of Section [1-2], BWP switching occurs based on the type of data to be transmitted or received, while in the embodiment of Section [1-3], BWP switching occurs based on the amount of data stored in a buffer.

Referring to the embodiment of Section [1-2], the configuration for the switching pattern may include first information on (i) the type of data to which the switching is to be applied, (ii) the number of time periods in which the first BWP is configured as the active BWP and the length of each of the time periods, and (iii) the number of time periods in which the second BWP is configured as the active BWP and the length of each of the time periods. The type of data may refer to data that varies based on the service provided to the user, such as VoIP services or extended reality (XR) data. Based on the configuration for the switching pattern, the UE may transmit or receive the type of data indicated by the switching pattern during the time period when the active BWP is the second BWP. Thereafter, even without separate signaling, once the time period configured by the switching pattern has elapsed, the active BWP may switch from the second BWP to the first BWP.

Additionally, referring to the embodiment of Section [1-3], the configuration for the switching pattern may include second information on (i) the type of buffer to which the switching is to be applied, (ii) a threshold for the amount of data required for switching to be performed, and (iii) a BWP to be used when the amount of data exceeds the threshold between the first BWP and the second BWP and a BWP to be used when the amount of data is below the threshold. The UE may switch the active BWP from the first BWP to the second BWP if the amount of generated data exceeds the threshold. The UE may transmit or receive data associated with the buffer while the active BWP is the second BWP. Thereafter, even without separate signaling, once the amount of data stored in the buffer is below the threshold configured by the switching pattern, the active BWP may switch from the second BWP to the first BWP.

Additionally, referring to Sections [1-2] and [1-3], the configuration for the switching pattern is received via RRC signaling. The UE may receive indications for the activation or deactivation of the configurations for the switching pattern through a MAC CE and/or DCI. Alternatively, the configuration for the switching pattern may include information for multiple switching patterns. In this case, the configuration for the switching pattern may include first and/or second information as many switching patterns as there are. The UE may receive at least one of the configurations for the switching patterns through the MAC CE and/or DCI.

Referring to Section [1-4], the BWP switching according to the switching pattern may only be applied when the first BWP and the second BWP overlap. Specifically, the BWP switching according to the switching pattern may be applied only when all or some of the RBs constituting the first BWP overlap with the RBs constituting the second BWP or when all or some of the RBs constituting the second BWP overlap with the RBs constituting the first BWP.

Referring to Section [1-7], it may be indicated that the switching according to the switching pattern is not performed during a specific time period. For example, if the UE receives DCI instructing the suspension of the BWP switching according to the switching pattern for a certain time period, even if the type of data indicated by the switching pattern or the amount of data in the buffer exceeds the threshold during the indicated time period, the active BWP may not switch from the first BWP to the second BWP.

Additionally, referring to another example in Section [1-7], if new data to be transmitted or received or HARQ transmission occurs in the current active BWP, the BWP switching according to the switching pattern may be suspended until the transmission or reception of the newly generated data or the HARQ transmission is completed.

In addition to at least one of the operations explained above, one or more of the operations in Section [2] may be combined.

For example, referring to Section [2-3], a method of transitioning between first BWP switching (BWP switching type 2) based on a switching pattern and second BWP switching (BWP switching type 1) that operates without a switching pattern may be defined and/or configured. The transition between the first BWP switching and the second BWP switching may be performed through a MAC CE and/or DCI. The MAC CE and/or DCI may explicitly indicate the transition between the first BWP switching and the second BWP switching. Alternatively, as disclosed in Section [2-5], if the MAC CE and/or DCI is intended to trigger the second BWP switching, the UE may ignore the first BWP switching based on the switching pattern and perform the triggered second BWP switching.

Additionally, when the first BWP switching is deactivated and the second BWP switching is activated, a previously configured delay (T_a) may be applied. Alternatively, if the first BWP switching is configured as the default switching type, the second BWP switching may be activated for a specific time (T _b) through the transition between the first BWP switching and the second BWP switching. After a certain time passes, the second BWP switching may be deactivated, and then the first BWP switching may be activated again.

Additionally, referring to Section [2-4], scheduling for the UE where the first BWP switching is configured and/or applied may be restricted such that a BWP where DCI is received and a BWP where data is transmitted and/or received are the same. For example, after the active BWP is switched to the second BWP by the first BWP switching, the UE may receive DCI scheduling data (which may be referred to as second data to distinguish the data from data triggering the switching). The second data is scheduled such that the active BWP becomes the second BWP according to the switching pattern. Specifically, when a PDSCH is scheduled through DCI, the reception position of the PDSCH may be located within the same BWP as a PDCCH that carries the DCI scheduling the PDSCH such that a slot offset k0 between the PDCCH and PDSCH may be limited accordingly. When a PUSCH is scheduled through DCI, the transmission position of the PUSCH may be located within the same BWP as a PDCCH that carries the DCI scheduling the PUSCH such a slot offset k2 between the PDCCH and PUSCH may be limited accordingly. The embodiment in Section [2-4] does not withhold switching and transmit or receive data as described in Section [1-7], but allows for the transmission or reception of data after two times of BWP switching, where the active BWP switches from the first BWP to the second BWP and then back to the first BWP before data transmission or reception.

The operations of Sections [1] and [2] may be performed in combination with the operations described in Section [3].

For example, when the UE has multiple DRX configurations, a different embodiment may be applied for each DRX configuration. Specifically, when first DRX is configured, the UE may operate in the NES mode, and when second DRX is configured, the UE may operate in the non-NES mode.

In addition to the operations described with reference to FIG. 4, one or more of the operations explained with reference to FIGS. 1 to 3 and/or in Sections [1] to [3] may be combined and further performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

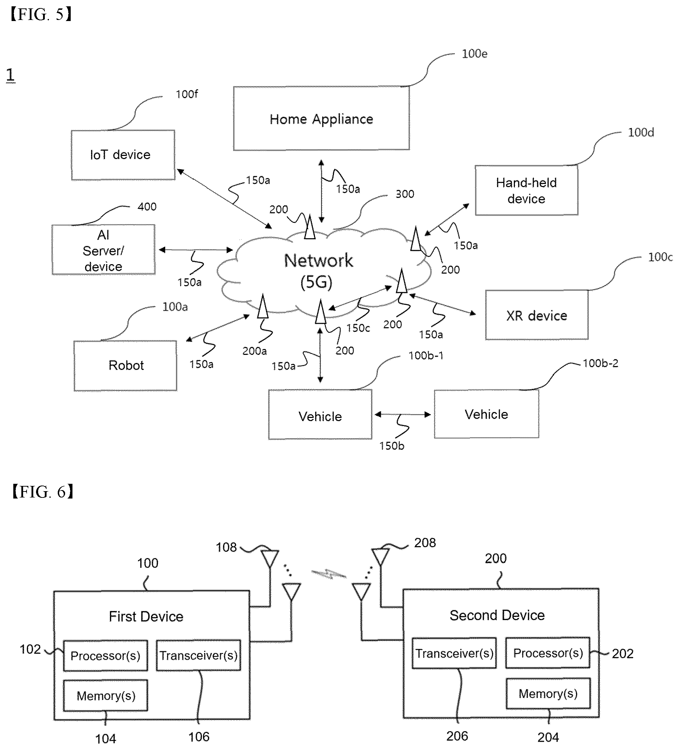

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

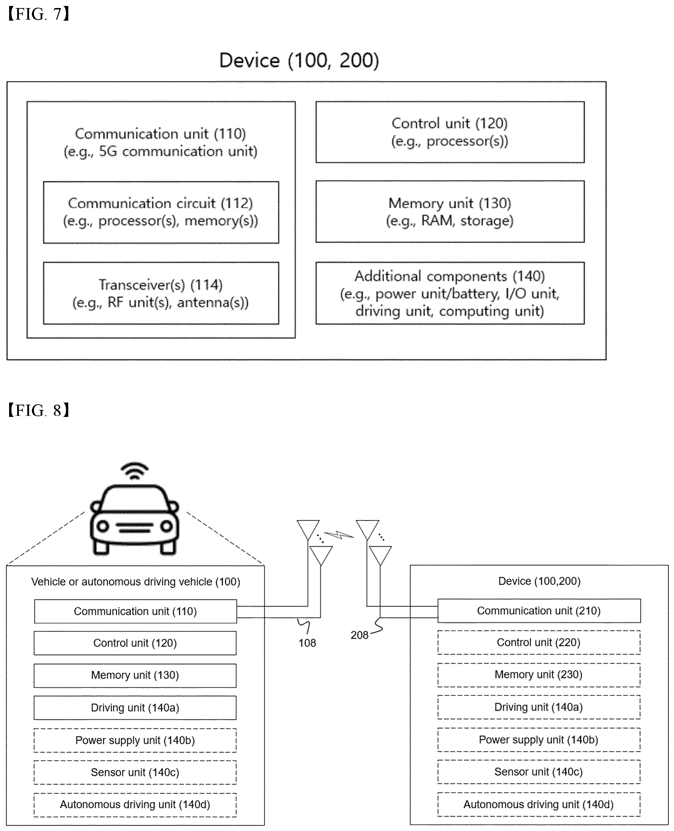

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically configuration a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving signals by a user equipment (UE) in a wireless communication system, the method comprising:
receiving a configuration for a switching pattern between a first bandwidth part (BWP) and a second BWP for a network energy saving (NES) mode;
switching an active BWP from the first BWP to the second BWP according to the switching pattern based on data to be transmitted or received; and
transmitting or receiving the data in the second BWP.

2. The method of claim 1, wherein the active BWP is switched from the first BWP to the second BWP based on a type of the data.

3. The method of claim 1, wherein the active BWP is switched from the first BWP to the second BWP based on an amount of data stored in a buffer.

4. The method of claim 2, wherein the configuration comprises information on:
(i) the type of the data to which the switching is to be applied;
(ii) a number of time periods in which the first BWP is configured as the active BWP and a length of each time period; and
(iii) a number of time periods in which the second BWP is configured as the active BWP and a length of each time period.

5. The method of claim 3, wherein the configuration comprises information on:
(i) a type of the buffer to which the switching is to be applied;
(ii) a threshold for an amount of the data required for the switching to be performed; and
(iii) a BWP to be used based on the amount of the data exceeding the threshold between the first BWP and the second BWP and a BWP to be used based on the amount of the data being below the threshold.

6. The method of claim 1, wherein the configuration comprises information on a plurality of switching patterns, and
wherein one configuration is indicated through a medium access control (MAC) control element (CE) or downlink control information (DCI).

7. The method of claim 1, wherein the configuration is received through radio resource control (RRC) signaling, and
wherein the configuration is activated or deactivated through a medium access control (MAC) control element (CE) or downlink control information (DCI).

8. The method of claim 1, wherein all or some of resource blocks (RBs) included in the first BWP overlap with RBs included in the second BWP, or
wherein all or some of the RBs included in the second BWP overlap with the RBs included in the first BWP.

9. The method of claim 1, further comprising receiving downlink control information (DCI) indicating suspension of the BWP switching according to the switching pattern for a predetermined time period,
wherein during the predetermined time period, the active BWP is not switched from the first BWP to the second BWP based on the data to be transmitted or received.

10. The method of claim 1, wherein based on occurrence of second data or hybrid automatic repeat request (HARQ) information after the active BWP is switched to the second BWP, the switching of the active BWP according to the switching pattern is suspended until transmission or reception of the second data or HARQ information is completed.

11. The method of claim 1, wherein first BWP switching according to the switching pattern is deactivated through a medium access control (MAC) control element (CE) or downlink control information (DCI), and
wherein second BWP switching operating without the switching pattern is activated.

12. The method of claim 11, wherein based on elapse of a predetermined time after the second switching is activated, the first BWP switching is deactivated, and the first BWP switching is reactivated.

13. The method of claim 1, further comprising receiving DCI for scheduling second data after the active BWP is switched to the second BWP,
wherein the second data is scheduled to be transmitted or received in a time period during which the active BWP is the second BWP according to the switching pattern.

14. The method of claim 1, wherein based on that first discontinuous reception (DRX) is configured, the UE operates in the NES mode, and
wherein based on that second DRX is configured, the UE operates in a non-NES mode.

15. A user equipment (UE) configured to configure radio resources in a wireless communication system, the UE comprising:
at least one transceiver;
at least one processor; and
at least one memory operably connected to the at least one processor and storing instructions that, when executed, cause the at least one processor to perform specific operations comprising:
receiving a configuration for a switching pattern between a first bandwidth part (BWP) and a second BWP for a network energy saving (NES) mode;
switching an active BWP from the first BWP to the second BWP according to the switching pattern based on data to be transmitted or received; and
transmitting or receiving the data in the second BWP.

16. An apparatus for a user equipment (UE), the apparatus comprising:
at least one processor; and
at least one computer memory operably connected to the at least one processor and configured to, when executed, cause the at least one processor to perform operations comprising:
receiving a configuration for a switching pattern between a first bandwidth part (BWP) and a second BWP for a network energy saving (NES) mode;
switching an active BWP from the first BWP to the second BWP according to the switching pattern based on data to be transmitted or received; and
transmitting or receiving the data in the second BWP.

17. A computer-readable non-volatile storage medium comprising at least one computer program configured to cause a user equipment (UE) having at least one processor to perform operations comprising:
receiving a configuration for a switching pattern between a first bandwidth part (BWP) and a second BWP for a network energy saving (NES) mode;
switching an active BWP from the first BWP to the second BWP according to the switching pattern based on data to be transmitted or received; and
transmitting or receiving the data in the second BWP.
